(19) Europäisches Patentamt
European Patent Office
Office européen des brevets

(11) **EP 3 475 556 B1**

(12) **FASCICULE DE BREVET EUROPEEN**

(45) Date de publication et mention de la délivrance du brevet:
**05.08.2020 Bulletin 2020/32**

(21) Numéro de dépôt: **17745387.5**

(22) Date de dépôt: **20.06.2017**

(51) Int Cl.:
*F02P 5/15* *(2006.01)*  *F02D 41/14* *(2006.01)*

(86) Numéro de dépôt international:
**PCT/FR2017/051629**

(87) Numéro de publication internationale:
**WO 2017/220921 (28.12.2017 Gazette 2017/52)**

(54) **PROCEDE DE DETERMINATION DE L'AVANCE A L'ALLUMAGE D'UN MOTEUR A COMBUSTION INTERNE ET PROCEDE DE CONTROLE D'UN MOTEUR UTILISANT UN TEL PROCEDE**

VERFAHREN ZUR BESTIMMUNG DER ZÜNDVORVERSTELLUNG EINES VERBRENNUNGSMOTORS UND VERFAHREN ZUR STEUERUNG EINES MOTORS MITTELS EINES SOLCHEN VERFAHRENS

METHOD FOR DETERMINING THE ADVANCE OF IGNITION OF AN INTERNAL COMBUSTION ENGINE AND METHOD FOR CONTROLLING AN ENGINE USING SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.06.2016 FR 1655872**

(43) Date de publication de la demande:
**01.05.2019 Bulletin 2019/18**

(73) Titulaire: **Renault S.A.S.**
**92100 Boulogne-Billancourt (FR)**

(72) Inventeurs:
• **CANTO DE ALENCAR MOTTA, Joao**
  **92310 Sevres (FR)**
• **LESERVOISIER, David**
  **91700 Sainte Geneviève des bois (FR)**

(56) Documents cités:
**EP-A1- 1 201 921    WO-A1-2006/120549**
**WO-A2-02/095191    FR-A1- 2 776 066**
**US-A- 5 765 527**

**Description**

DOMAINE TECHNIQUE DE L'INVENTION

L'invention concerne un procédé de détermination de l'avance à l'allumage d'un moteur à combustion interne du type à allumage commandé. Elle concerne également un procédé de contrôle d'un tel moteur utilisant le modèle d'avance à l'allumage issu dudit procédé.

ETAT DE LA TECHNIQUE

Dans les moteurs à combustion interne du type à allumage commandé (fonctionnant à l'essence), il est connu de déterminer l'angle d'avance à l'allumage en fonction d'un ensemble de paramètres de fonctionnement du moteur comprenant au moins le régime du moteur et la charge, ou quantité d'air admise, ladite charge pouvant être déduite notamment de la position angulaire d'ouverture d'un boîtier-papillon qui vanne le débit d'air à l'entrée du moteur.

Selon la constitution du moteur, il peut être nécessaire de tenir compte de plusieurs paramètres supplémentaires. De manière non exhaustive :
Notamment, si le moteur est du type suralimenté, la charge du moteur dépend non seulement de la position angulaire d'ouverture du boîtier-papillon, mais aussi d'un paramètre représentatif de la proportion des gaz d'échappement détendus dans la turbine du turbocompresseur et dont l'énergie de détente sert à comprimer l'air d'admission dans le compresseur du turbocompresseur : il peut s'agir classiquement du degré d'ouverture d'une vanne de décharge des gaz à l'échappement (ou, selon l'acronyme anglais : vanne « waste-gate »).

Notamment aussi, si le moteur comprend des moyens de calage variable d'un arbre à cames d'admission ou d'un arbre à cames d'échappement du moteur, l'avance à l'allumage du moteur peut aussi dépendre du calage desdits arbres à cames, par exemple de l'instant du début de l'ouverture des soupapes d'admission et des soupapes d'échappement.

Notamment encore, si le moteur est du type à injection directe, on peut aussi prendre en compte la richesse du mélange air-carburant, dans la mesure où celle-ci varie par rapport au rapport stœchiométrique, et le calage du motif d'injection du carburant, par exemple l'instant du début de l'injection du carburant dans les cylindres du moteur.

Quelle que soit la combinaison de paramètres à considérer, on règle au banc d'essai l'avance à l'allumage de manière à optimiser les performances du moteur. Par exemple, si l'avance dite « avance optimale », qui maximise le couple produit par le moteur dans lesdites conditions constantes de régime, de charge, et d'autres paramètres, ne produit pas de cliquetis dans le moteur, on peut chercher à régler la valeur de l'avance sur ladite valeur d'avance optimale. Dans le cas contraire, on peut choisir une valeur d'avance à l'allumage qui présente un retrait suffisant par rapport au point mort haut de fin de compression dans les cylindres du moteur pour qu'il n'y ait pas de cliquetis.

L'enfoncement de la pédale d'accélérateur d'un véhicule équipé du moteur est interprété par un calculateur du moteur comme une consigne de couple requis par le conducteur pour l'entraînement du véhicule. En fonction de cette consigne de couple et du régime du moteur, le calculateur commande différents actionneurs du moteur de manière à régler la charge, l'injection de carburant et l'avance à l'allumage. Toutes les valeurs d'avance à l'allumage sont stockées dans une mémoire du calculateur, par exemple sous forme de cartographies dépendant des différentes valeurs de la combinaison de paramètres considérés (régime, charge, etc.). Ces cartographies prennent donc beaucoup de place en mémoire.

D'autre part, il est aussi connu, dans certaines conditions, de modifier l'avance à l'allumage d'un moteur pour commander une réduction quasi-instantanée du couple produit, dans la mesure où il s'agit là d'un procédé beaucoup plus rapide que la modification de la charge du moteur par le réglage de la chaîne d'air du moteur. En effet, une modification de l'avance à l'allumage produit sans délai une modification du déroulement de la combustion dans les cylindres du moteur, tandis qu'une modification du degré d'ouverture d'un boîtier-papillon, par exemple, ne se répercute qu'avec retard sur la masse d'air admise dans les cylindres en raison de la distance à parcourir par la masse d'air entre le boîtier-papillon et les cylindres.

Ce cas se présente, de manière non limitative, dans le cas où le conducteur lève le pied rapidement de la pédale d'accélérateur pour changer de rapport de boîte de vitesses : à cet instant, la requête de couple devient nulle ou très faible, et le calculateur du moteur procède instantanément à un retrait d'avance pour adapter le couple en conséquence. De la même manière, si le moteur est associé à une boîte de vitesses automatique dans le véhicule, un calculateur de la boîte de vitesses peut procéder à une requête de couple plus faible que le couple courant vis-à-vis du moteur de manière à permettre un changement de rapport. La valeur de couple requis est aussi obtenue en modifiant l'avance à l'allumage du moteur.

Pour ce faire, il est nécessaire de connaître les variations de l'avance à l'allumage non seulement en fonction du régime et de la charge (et le cas échéant d'autres paramètres tels que ceux qui sont mentionnés plus haut), mais aussi en fonction du couple.

Selon l'état de la technique, on peut stocker en mémoire du calculateur des calibrations de valeur d'avance en fonction du régime, de la charge, et du couple. Cela conduit à multiplier par le nombre de valeurs de couple choisies, les calibrations à stocker, ce qui est extrêmement coûteux en taille-mémoire.

On connaît aussi de la publication US6481416 un procédé de correction de l'avance à l'allumage d'un moteur à combustion interne, dans lequel une valeur de correction d'avance est calculée dans un bloc de calcul en fonction de la valeur du rapport entre le couple moteur et le couple maximal. Plus précisément, ce bloc de calcul met en oeuvre une courbe parabolique qui relie de manière biunivoque le rapport entre le couple moteur et la valeur maximale du couple (dite : couple optimal), à l'avance. On comprend qu'une seule équation correspondant à la courbe parabolique est stockée dans un calculateur du moteur et sert à calculer la correction d'avance à appliquer en fonction d'une valeur de couple à obtenir, sans qu'il soit besoin de disposer de calibrations reliant chaque valeur d'avance à chaque valeur de couple individuellement.

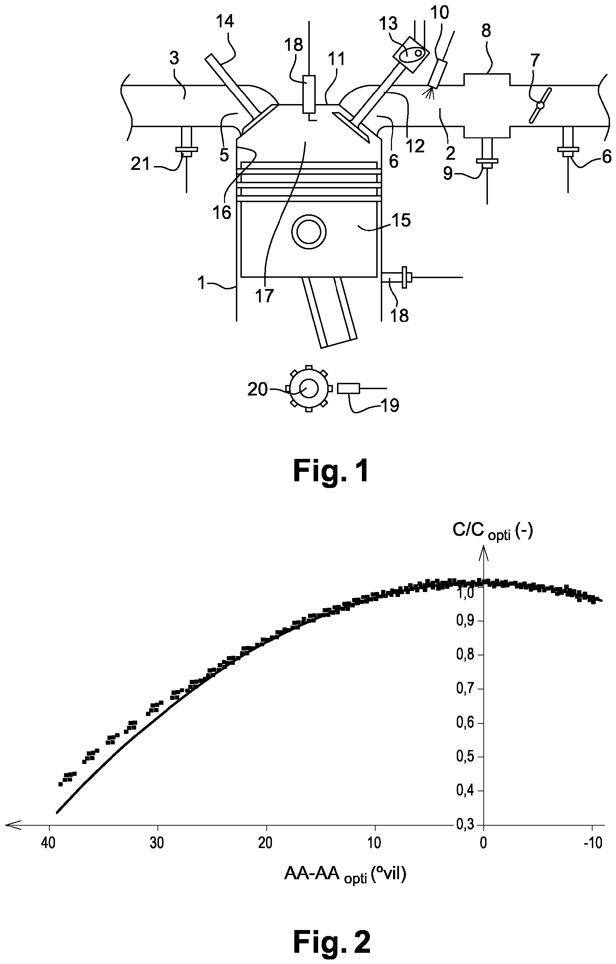

Un tel procédé, dans lequel le couple est modélisé en fonction de l'avance sous forme d'un polynôme d'ordre 2 correspondant à une parabole, n'est cependant pas assez précis, comme le montre la figure 2 annexée.

Sur la figure 2, on a représenté en abscisse la différence entre une valeur courante d'avance à l'allumage AA et une valeur d'avance optimale AAopti, pour un point de fonctionnement identique du moteur (même régime ; même charge ; et, le cas échéant, autres paramètres supplémentaires identiques). Conventionnellement les valeurs d'avance sont ici comptées positivement lorsqu'il s'agit de valeurs de retrait par rapport au point mort haut dans les cylindres du moteur, c'est-à-dire lorsque l'allumage intervient avant que le piston n'atteigne le point mort haut de fin de temps de compression dans les cylindres du moteur. Ainsi, on a orienté l'axe des abscisses vers la gauche. En ordonnée, on a représenté le rapport entre le couple C produit par le moteur et le couple maximal Copti qui correspond à l'avance optimale AAopti.

Les points individuels représentés sur la figure 2 correspondent à des mesures physiques relevées au banc d'essai pour un moteur atmosphérique à essence d'une cylindrée de 2,0 litres produit par la demanderesse, tandis que la courbe en trait plein est la parabole que l'on peut déduire des différents points individuels, par exemple par la méthode des moindres carrés.

Un tel modèle correspond à une équation du type :

$$(Equ.1) \qquad C/Copti = 1 - k * (AA-AAopti)^2$$

, équation dans laquelle le paramètre k est une constante positive

La demanderesse a constaté que ce modèle ne représente pas assez précisément la valeur de couple obtenue pour une valeur d'avance donnée lorsque ladite valeur de couple est faible. Sur la figure 2, on constate plus particulièrement que pour les valeurs de retrait d'avance par rapport à l'avance optimale qui sont comprises (dans cet exemple précis) entre 30 et 40° d'angle vilebrequin, la courbe parabolique sous-estime le couple obtenu lorsqu'on applique un retrait donné, par rapport à la réalité.

En d'autres termes, si le calculateur pilote un retrait d'avance pour ajuster le couple sur une valeur nulle ou faible de consigne en utilisant la seule relation parabolique, alors le couple obtenu sera en réalité plus élevé que ladite consigne, ce qui pourra se traduire notamment par des à-coups dans le véhicule.

US5765527A montre un procédé de commande du couple d'un moteur à combustion interne, dans lequel l'avance à l'allumage est calculée selon une équation prédéterminée.

WO02/095191 A2 montre un procédé de commande d'un moteur à combustion interne, dans lequel l'avance à l'allumage est calculée en fonction de la pression de cylindre.

RESUME DE L'INVENTION

L'invention propose de remédier aux défauts des procédés connus de détermination de l'avance et des procédés de contrôle d'un moteur utilisant de tels procédés de détermination de l'avance par un modèle.

Elle vise plus particulièrement à proposer un modèle de représentation de l'avance à l'allumage en fonction du couple qui soit précis tout en étant stockable dans une mémoire du calculateur dans un espace limité.

Elle propose pour cela un procédé de détermination de l'avance à l'allumage en fonction du couple d'un moteur à combustion interne à allumage commandé, par modélisation, comportant pour un ensemble de paramètres représentatifs du point de fonctionnement du moteur donné :

- Une étape au cours de laquelle on augmente par pas la valeur de l'avance AA entre une valeur d'avance optimale AAopti pour laquelle le couple C est égal au couple optimal Copti, et une valeur d'avance maximale AAmax pour laquelle le couple C produit par le moteur est minimal, et on relève la valeur d'avance ;

- Une étape au cours de laquelle on relève la valeur de couple C produit par le moteur pour chaque valeur d'avance de l'étape précédente d'augmentation de l'avance ;
- Une étape au cours de laquelle on réalise un relevé de tous les couples de valeurs avance AA / couple C correspondant aux différents pas de réglage ;
- Une étape au cours de laquelle on détermine, à partir des couples de valeurs précédents, une relation parabolique entre le couple C et l'avance AA, selon une équation du type :

$$(Equ.1) \qquad C/Copti = 1 - k * (AA - AAopti)2$$

, équation dans laquelle k est une constante positive,

CARACTERISE EN CE QU'il comprend en outre au moins :

- Une étape au cours de laquelle on relève une valeur de seuil d'avance AAlin , produisant une valeur de seuil de couple Cs , au-dessus de laquelle la valeur relevée du couple C produite par l'avance AA est supérieure à la valeur calculée par l'équation correspondant à ladite relation parabolique, et on détermine à partir d'un sous-ensemble de couple de valeurs avance / couple pour lesquels l'avance AA est supérieure audit seuil d'avance AAlin, une relation linéaire entre le couple C et l'avance, selon une équation du type :

$$(Equ.2) \qquad C/Copti = K * ( (AA_0 - AAopti) - (AA - AAopti) )$$

, équation dans laquelle K est une constante positive ; et,
- Une étape au cours de laquelle :

    - On inverse les équations précédentes en déterminant l'avance AA en fonction du couple C par des équations du type :

$$(Equ.3) \qquad AA = AAopti + a * (1 - C/Copti)^{1/2} ,$$

    pour les valeurs de couple comprises entre ledit seuil de couple Clin et le couple optimal Copti

$$(Equ.4) \qquad AA = AAopti - b * (C/Copti) + c ,$$

    pour les valeurs de couple comprises entre zéro et ledit seuil de couple Clin,
    Où les paramètres a, b et c sont des constantes positives ; et,
    - On stocke lesdits paramètres dans une mémoire d'un calculateur du moteur, et on programme dans un bloc de calcul du calculateur du moteur, apte à ajuster l'avance à l'allumage AA en fonction du couple C, une séquence d'instructions pour ledit ajustement, comprenant au moins une étape de comparaison du couple avec le seuil de couple Clin et une étape de calcul de l'avance selon l'équation 3 ou selon l'équation 4 en fonction du résultat de ladite comparaison.

BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :

- la figure 1 représente un exemple de moteur à combustion interne à allumage commandé apte à la mise en oeuvre du procédé selon l'invention ;
- la figure 2 est un schéma qui représente la relation parabolique entre un couple moteur et une avance à l'allumage dans un procédé de détermination selon l'état de la technique, déjà commentée plus haut ;
- la figure 3 est un organigramme des étapes du procédé de détermination de l'avance selon un mode de réalisation de l'invention ; et,
- la figure 4 est un schéma qui représente la relation linéaire ou parabolique entre un couple moteur et une avance à l'allumage, à l'appui du procédé selon l'invention.

## DESCRIPTION DETAILLEE DES FIGURES

Sur la figure 1, on a représenté un moteur à combustion interne du type à allumage commandé (fonctionnant à l'essence), plus précisément une coupe d'un cylindre 1 du bloc moteur. Un circuit d'admission 2 et un circuit d'échappement 3 communiquent respectivement avec un conduit d'admission 4 et un conduit d'échappement 5 du cylindre 1. Un capteur de température 6 est monté dans le circuit d'admission 2 pour mesurer la température d'air d'admission Tair. Une vanne de réglage du débit d'air 7, ou boîtier-papillon 7, est monté dans le circuit d'admission 2 en aval du capteur de température 6. Un collecteur d'admission 8, ou répartiteur 8, est monté dans le circuit d'admission 2 en aval du boîtier-papillon 7. Un capteur de pression 9 est monté sur le collecteur d'admission 8, par exemple sur un plénum du collecteur d'admission 8, de manière à mesurer la pression de collecteur Pcoll.

Ici, le moteur se présente de manière non limitative sous la forme d'un moteur à injection indirecte : un injecteur de carburant 10 débouche dans le conduit d'admission 4 de manière à injecter de l'essence dans ledit conduit 4. En variante non représentée, le moteur peut être du type à injection directe.

Le cylindre 1 est coiffé par une culasse 11 du moteur. La culasse 11 loge une soupape d'admission 12 qui sert à ouvrir et à fermer le conduit d'admission 4. Celle-ci est ici pourvue de moyens de calage variable qui permettent de rendre variable le moment de l'ouverture de ladite soupape d'admission dans le cycle de combustion du moteur. Un capteur d'angle de came 13 est associé à ces moyens de calage variable pour détecter l'ouverture de la soupape d'admission 12.

La culasse 11 loge aussi une soupape d'échappement 14 qui sert à ouvrir et à fermer le conduit d'échappement 5. Ici, la soupape d'échappement 14 n'est pas pourvue de moyens de calage variable similaires à ceux de la soupape d'admission. Bien entendu, dans des variantes de modes de réalisation non représentées, le moteur pourrait aussi comporter des moyens de calage variable à l'admission et à l'échappement, ou au contraire aucun moyen de calage variable.

Le cylindre 1 renferme un piston 15 apte à se déplacer à l'intérieur d'un alésage 16 du cylindre 1 alternativement entre une position de point mort bas (PMB) et de point mort haut (PMH), et une chambre de combustion 17 est formée dans l'espace défini entre le piston 15 et la culasse 11.

Une bougie d'allumage 18 est montée sur la culasse 11, dont les électrodes débouchent dans la chambre de combustion 17. Un capteur de cliquetis 18 peut être monté sur le cylindre 1 de manière à détecter l'apparition de cliquetis dans le moteur. Un capteur d'angle de de vilebrequin 19 est associé à un vilebrequin 20 du moteur. Un capteur de richesse 21, ou sonde à oxygène 21, est monté dans le circuit d'échappement 3 du moteur, en amont d'au moins un dispositif de post-traitement des gaz (non représenté), par exemple un catalyseur trois voies.

Un calculateur du moteur (non représenté), comprend des moyens aptes à déterminer au moins une valeur de charge (Qair) et une valeur d'avance à l'allumage (AA) en fonction d'un ensemble de paramètres représentatifs du fonctionnement du moteur, comprenant au moins le couple (C) et le régime (N) du moteur. Il comprend selon l'invention un bloc de calcul apte à ajuster ladite avance (AA) en fonction d'une variation d'une consigne de couple (C), selon une suite d'instructions programmées dans le bloc de calcul et comprenant au moins : la comparaison de ladite consigne de couple (C) avec un seuil (Clin) ; et, le calcul de la valeur d'avance (AA) à ajuster selon une équation qui dépend du résultat de la comparaison. Ces équations sont détaillées plus bas.

Le moteur pour la mise en oeuvre du procédé selon l'invention peut aussi présenter d'autres particularités, non représentées sur l'exemple de la figure 1. Par exemple, s'il s'agit d'un moteur suralimenté, il peut comporter un turbocompresseur, dont le compresseur est monté dans le circuit d'admission 2 en aval du répartiteur 9, et dont la turbine est montée dans le circuit d'échappement 5 en amont du capteur de richesse 21. Le circuit d'échappement 3 peut alors comporter, pour ajuster la pression de suralimentation du moteur, une branche de dérivation de la turbine par les gaz d'échappement du moteur, ladite branche de dérivation étant équipée d'une vanne de décharge (dite : vanne « wastegate ») dont le degré d'ouverture permet de régler la proportion des gaz d'échappement traversant la turbine.

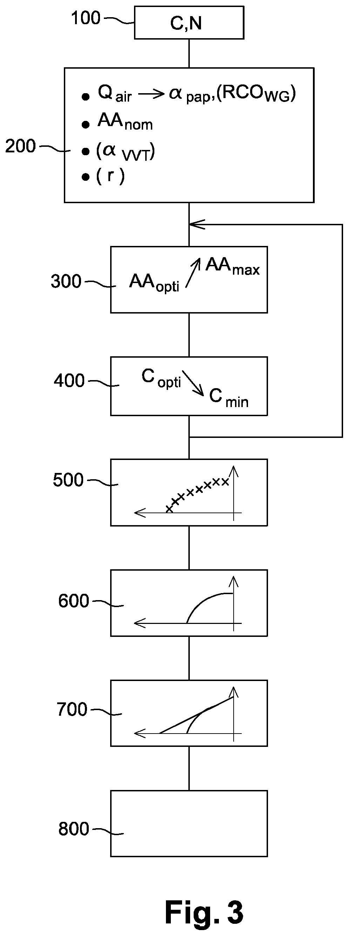

En référence à la figure 3, un procédé de détermination de l'avance à l'allumage AA en fonction du couple dans un moteur à combustion interne à allumage commandé, par modélisation, peut comprendre les étapes suivantes : On relève au banc moteur dans une première étape 100 un ensemble de paramètres représentatifs du point de fonctionnement du moteur, comprenant au moins une valeur de couple C et le régime N.

Pour obtenir le couple C, le moteur est réglé à l'étape 200 sur son réglage nominal, qui comprend au moins le réglage de la charge Qair et d'une valeur nominale d'avance à l'allumage AAnom . Des paramètres supplémentaires peuvent être réglés selon la configuration du moteur, notamment la position $\alpha$VVT de moyens de calage variable des cames d'admission et/ou d'échappement, mesurée grâce à un capteur d'angle de came 13, la richesse r du mélange air-carburant, mesurée grâce au capteur de richesse 21, etc.

La charge Qair peut être réglée au banc par un calculateur du moteur en ajustant le degré d'ouverture $\alpha$pap du boîtier-papillon 7. Des paramètres supplémentaires peuvent être réglés aussi, notamment le degré d'ouverture

RCOwg d'une vanne de décharge à l'échappement (vanne waste-gate) si le moteur est suralimenté. La charge Qair sera déterminée, de manière connue, à partir de la pression régnant dans le collecteur d'admission Pcoll, de la section efficace du boîtier-papillon dépendant de son degré d'ouverture αpap et de la température de l'air admis Tadm mesurée par le capteur de température d'air 6.

Le calculateur règle aussi l'avance à l'allumage nominale AAnom en déclenchant une étincelle entre les électrodes de la bougie d'allumage 18.

Les deux étapes suivantes du procédé sont réalisées de manière itérative. A l'étape 300, on augmente d'abord le couple C du moteur depuis sa valeur courante jusqu'à la valeur de couple optimal Copti. Pour cela, on diminue l'avance à l'allumage du moteur AA depuis sa valeur nominale AAnom jusqu'à une valeur d'avance qui maximise le couple (couple optimal), c'est-à-dire jusqu'à l'avance optimale AAopti.

L'avance optimale AAopti pouvant se trouver dans le domaine du cliquetis lorsque le moteur fonctionne avec le carburant du commerce qu'il utilise habituellement sur le véhicule de série, on prend la précaution de réaliser l'étape 300 avec un carburant spécifique à très haut indice d'octane, de façon que l'avance optimale AAopti puisse effectivement être atteinte sans que le capteur de cliquetis 18 ne détecte du cliquetis.

A partir de l'avance optimale AAopti, on augmente progressivement l'avance à l'allumage AA du moteur, par exemple par pas de quelques dixièmes de degré d'angle vilebrequin, les paramètres de réglage de l'étape 200 (charge d'air Qair, etc.) restant inchangés à l'exception de ladite avance AA. En d'autres termes, dans la mesure où on compte conventionnellement l'avance à l'allumage positivement quand elle intervient avant le point mort haut, on augmente le retrait d'avance. On relève la valeur d'avance réglée à chaque pas.

A l'étape 400, pour chaque valeur d'avance à l'allumage de l'étape 300 relevée à l'étape 300, on relève le couple moteur C obtenu. A mesure que l'avance à l'allumage AA augmente, le couple C diminue. Après chaque étape 400, le procédé reprend à l'étape 300, jusqu'à ce que le couple C mesuré à l'étape 400 soit nul ou bien égal à une valeur de couple minimal Cmin faible mais non nulle correspondant par exemple à une limite de stabilité de fonctionnement du moteur.

L'étape suivante 500 est engagée lorsqu'on connait la valeur maximale d'avance à l'allumage AAmax qui produit ledit couple minimal Cmin. Si la valeur de couple nul peut être atteinte sans problème particulier de fonctionnement du moteur, cette avance maximale AAmax est égale à une valeur particulière $AA_0$ d'avance à l'allumage dite avance de couple nul $AA_0$ dans la suite. A l'étape 500, on réalise un relevé de tous les couples de valeurs avance AA / couple C obtenus pour tous les pas d'avance de l'étape 300.

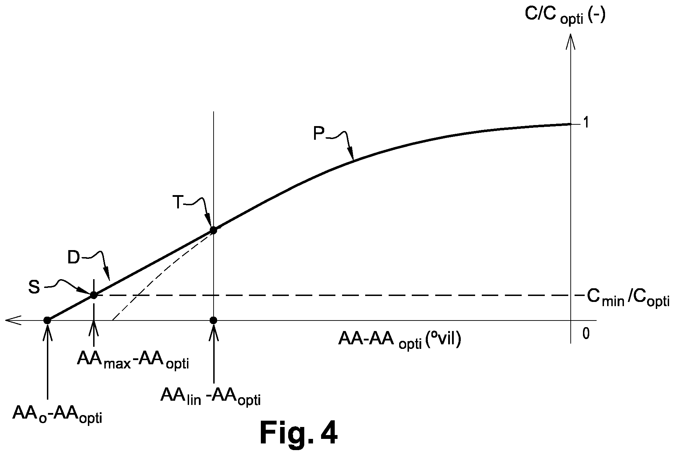

A l'étape 600, on modélise une relation parabolique entre le couple C et l'avance à l'allumage AA à partir des points relevés à l'étape 500, c'est-à-dire une équation du second degré du type : $C = u * AA^2 + v * AA + w$ , par exemple par la méthode des moindres carrés. Le sommet de la parabole correspond à la valeur de couple optimal Copti obtenue pour l'avance optimale AAopti. L'allure de la parabole correspond à la courbe P de la figure 4, elle comprend aussi la partie de la courbe en trait interrompu sur la figure 4.

L'équation du second degré peut alors se réécrire sous la forme de l'équation 1 déjà mentionnée plus haut

$$(Equ.1) \qquad C/Copti = 1 - k * (AA-AAopti)^2$$

A l'étape suivante 700, on relève la valeur de seuil d"avance à l'allumage AAlin pour laquelle le couple quitte l'allure parabolique déterminée par l'équation 1. Plus précisément, on a remarqué que pour des faibles valeurs de couple C correspondant à des valeurs d'avance à l'allumage AA élevées (dans le sens du retrait), la valeur de couple calculée par le modèle de l'équation parabolique est inférieure à la valeur mesurée. Le procédé selon l'invention vise à corriger le modèle parabolique pour ces faibles valeurs de couple inférieures à un seuil de couple Clin, correspondant aux valeurs d'avance AA supérieures à la valeur seuil AAlin correspondant au point T sur la figure 4.

A l'étape 700, on peut par exemple comparer les valeurs de couple C mesurées à l'étape 300 aux valeurs calculées pour une même valeur d'avance AA, et en extraire une sous-liste de couples de valeurs avance AA / couple C pour lesquels la valeur mesurée du couple est supérieure à la valeur calculée. Puis, à partir de cette sous-liste de couples de valeurs retenus, on modélise sur cette zone de faible couple une relation linéaire entre le couple C et l'avance AA, sous la forme d'une équation du premier degré du type : $C = d * AA + e$, par exemple par la méthode des moindres carrés. Cette équation permet de calculer des valeurs de couple C toujours plus élevées que les calculs issus de l'équation parabolique.

En variante, on peut à l'étape 700 procéder différemment, en déterminant directement l'équation linéaire à partir du seul couple de valeurs couple minimal Cmin / avance à l'allumage maximale AAmax, en imposant la condition supplémentaire que la droite D (voir figure 4) définie par l'équation du premier degré soit tangente à la parabole P (voir figure 4) définie par l'équation du second degré.

Si le couple minimal Cmin est strictement supérieur au couple nul, alors l'avance maximale AAmax est strictement inférieure à l'avance de couple nul $AA_0$. La valeur d'avance de couple nul $AA_0$ est alors déduite par calcul à partir de l'équation du premier degré de la droite D, c'est-à-dire par prolongement de la droite D passant par le point T de tangence avec la parabole P et le point S (voir figure 4) correspondant au couple : avance maximale AAmax / couple minimal Cmin.

Finalement, on peut reformuler la relation linéaire sous la forme de l'équation suivante :

$$\text{(Equ.2)} \qquad C/Copti = K * ( (AA_0 - AAopti) - (AA\text{-}AAopti) )$$

**[0049]** , équation dans laquelle le paramètre K est une constante positive.

A l'étape 800, on transforme les équations 1 et 2 en équations inverses, de manière à exprimer l'avance à l'allumage AA en fonction du couple C.

Il en résulte les équations suivantes :

$$\text{(Equ.3)} \qquad AA = AAopti + a * (1\text{-}C/Copti)^{1/2}$$

si le couple C est supérieur au seuil de couple Clin
c'est-à-dire si Clin < C < Copti
et

$$\text{(Equ.4)} \qquad AA = AAopti - b * C/Copti + c$$

Si le couple C est inférieur au seuil de couple Clin
c'est-à-dire si 0 < C < Clin
, équations dans lesquelles les paramètres a, b et c sont des constantes positives.

Enfin, pour chaque ensemble de paramètres représentatifs du point de fonctionnement du moteur, on stocke les paramètres a, b et c des équations 3 et 4 dans une mémoire du calculateur avec la condition de valeur de couple C associée, ce qui ne nécessite que peu de place en mémoire, contrairement aux procédés de l'état de la technique. En outre, on programme dans un bloc de calcul du calculateur du moteur, apte à ajuster l'avance à l'allumage (AA) en fonction du couple (C), une séquence d'instructions pour ledit ajustement, comprenant au moins une étape de comparaison du couple avec le seuil de couple (Clin) et une étape de calcul de l'avance selon l'équation 3 ou selon l'équation 4 en fonction du résultat de ladite comparaison.

Selon l'invention, les paramètres a, b et c sont déterminés de telle sorte que, lorsque le couple est inférieur au seuil de couple Clin, la condition suivante est remplie :

$$\text{(Equ.5)} \qquad AAopti - b * (C/Copti) + c > AAopti + a * (1\text{-}C/Copti)^{1/2}$$

On remplace ainsi, pour un couple donné C inférieur au seuil Clin à obtenir uniquement en modifiant une valeur d'avance AA, une valeur d'avance à appliquer estimée par l'équation 3 selon l'état de la technique (inverse d'une courbe parabolique), par une valeur AA d'avance plus élevée et plus proche de la réalité estimée par l'équation 4 (inverse d'une relation linéaire).

Un tel procédé de détermination de l'avance à l'allumage AA en fonction du couple est avantageusement mis en oeuvre dans un procédé de contrôle d'un moteur à combustion interne du type à allumage commandé selon la figure 1.

Dans un tel procédé, le conducteur d'un véhicule équipé du moteur maintient le pied sur la pédale d'accélérateur du véhicule avec une valeur d'enfoncement donnée, interprétée par le calculateur du moteur comme une consigne de couple Ccons du moteur, pour une vitesse du véhicule et un rapport de boîte de vitesse correspondant à un régime N du moteur.

Le calculateur du moteur règle un ensemble de paramètres représentatifs du point de fonctionnement du moteur, comprenant au moins la charge Qair et une valeur d'avance à l'allumage de consigne AAcons pour que le couple fourni soit égal à la consigne de couple Ccons.

Puis, une variation brutale à la baisse de la consigne de couple survient. Par exemple, une nouvelle consigne de couple Ccons,n peut être requise par le calculateur d'une boîte de vitesses automatique ou robotisée associée au moteur, en cas de besoin de changement de rapport. Une nouvelle consigne de couple Cons,n peut aussi être requise par un calculateur du véhicule en cas de déclenchement d'un système ESP du véhicule. Le cas peut également se présenter lorsque le conducteur lève le pied rapidement de l'accélérateur : le calculateur du moteur interprète la nouvelle position de la pédale comme une nouvelle consigne de couple Ccons,n inférieure à la précédente Ccons.

Le calculateur peut alors procéder à un réglage de l'avance à l'allumage AA du moteur, sans changer les autres paramètres représentatifs du point de fonctionnement du moteur (notamment la charge Qair). Pour cela, il met en oeuvre le procédé de détermination de l'avance en fonction du couple décrit à la figure 3.

Il procède à une étape de comparaison de la valeur de la nouvelle consigne de couple Ccons,n avec une valeur de seuil Clin prédéterminée qui correspond au point de fonctionnement du moteur (charge Qair).

Si la nouvelle consigne de couple Ccons,n est supérieure audit seuil, il procède au réglage de l'avance AA en utilisant l'équation 3 ; si la nouvelle consigne de couple Ccons,n est inférieure au seuil, il procède au contraire au réglage de l'avance AA en utilisant l'équation 4.

## Revendications

**1.** Procédé de détermination de l'avance à l'allumage (AA) en fonction du couple (C) d'un moteur à combustion interne à allumage commandé, par modélisation, comportant pour un ensemble de paramètres de :

 - Une étape (300) au cours de laquelle on augmente par pas la valeur de l'avance (AA) entre une valeur d'avance optimale (AAopti) pour laquelle le couple (C) est égal au couple optimal (Copti), et une valeur d'avance maximale (AAmax) pour laquelle le couple (C) produit par le moteur est minimal, et on relève la valeur d'avance ;
 - Une étape (400) au cours de laquelle on relève la valeur de couple (C) produit par le moteur pour chaque valeur d'avance de l'étape (300) ;
 - Une étape (500) au cours de laquelle on réalise un relevé de tous les couples de valeurs avance (AA) / couple (C) correspondant aux différents pas de réglage ;
 - Une étape (600) au cours de laquelle on détermine, à partir des couples de valeurs précédents, une relation parabolique entre le couple (C) et l'avance (AA), selon une équation du type :

$$(\text{Equ.1}) \quad C/Copti = 1 - k * (AA - AAopti)^2$$

,équation dans laquelle k est une constante positive,

**caractérisé en ce qu'**il comprend en outre au moins :

 - Une étape (700) au cours de laquelle on relève une valeur de seuil d'avance (AAlin), produisant une valeur de seuil de couple (Clin), au-dessus de laquelle la valeur relevée du couple (C) produite par l'avance (AA) est supérieure à la valeur calculée par l'équation correspondant à ladite relation parabolique, et on détermine à partir d'un sous-ensemble de couples de valeurs avance / couple pour lesquels l'avance (AA) est supérieure audit seuil d'avance (AAlin), une relation linéaire entre le couple (C) et l'avance (AA), selon une équation du type :

$$(\text{Equ.2}) \quad C/Copti = K * ( (AA_0 - AAopti) - (AA-AAopti) )$$

, équation dans laquelle K est une constante positive ; et $AA_0$ est l'avance de couple nul,
 - Une étape (800) au cours de laquelle :

  - on inverse les équations précédentes en déterminant l'avance (AA) en fonction du couple (C) par des équations du type :

$$(\text{Equ.3}) \quad AA = AAopti + a * (1-C/Copti)^{1/2} \, ,$$

  pour les valeurs de couple comprises entre ledit seuil de couple (Clin) et le couple optimal (Copti)

$$(\text{Equ.4}) \quad AA = AAopti - b * (C/Copti) + c \quad ,$$

pour les valeurs de couple comprises entre zéro et ledit seuil de couple (Clin), , où les paramètres a, b et c sont des constantes positives ; et

- on stocke lesdits paramètres dans une mémoire d'un calculateur du moteur, et on programme dans un bloc de calcul du calculateur du moteur, apte à ajuster l'avance à l'allumage (AA) en fonction du couple (C), une séquence d'instructions pour ledit ajustement, comprenant au moins une étape de comparaison du couple avec le seuil de couple (Clin) et une étape de calcul de l'avance selon l'équation 3 ou selon l'équation 4 en fonction du résultat de ladite comparaison.

2. Procédé selon la revendication 1, dans lequel lesdits paramètres sont stockés dans une mémoire du calculateur pour une pluralité d'ensembles de paramètres représentatifs du point de fonctionnement du moteur, comprenant au moins la charge (Qair) et le régime (N) du moteur.

3. Procédé selon la revendication 2, dans lequel l'ensemble de paramètres représentatifs du point de fonctionnement du moteur comprend en outre une position ($\alpha$VVT) de moyens de calage variable de cames du moteur et/ou une valeur de richesse (r) du mélange air / carburant du moteur.

4. Procédé selon l'une des revendications précédentes, dans lequel l'étape (300) de variation de l'avance (AA) est réalisée au banc moteur en utilisant un carburant d'indice d'octane plus élevé que le carburant commercial destiné au moteur, de sorte que l'avance optimale (AAopti) est atteinte au banc sans cliquetis.

5. Procédé selon l'une quelconques des revendications 2 à 4, dans lequel la charge (Qair) est déterminée au banc, pour la mise en oeuvre de l'étape (300) de variation de l'avance (AA), en ajustant au moins le degré d'ouverture $\alpha$pap d'un boîtier-papillon (7) du moteur.

6. Procédé selon la revendication 5, dans lequel la charge (Qair) est déterminée en outre en ajustant le degré d'ouverture (RCOwg) d'une vanne de décharge à l'échappement d'une turbine d'un turbocompresseur du moteur.

7. Procédé selon l'une quelconque des revendications précédentes, dans lequel les équations de détermination du couple (C) correspondant aux relations parabolique et linaire sont obtenues par la méthode des moindres carrés.

8. Procédé de contrôle d'un moteur à combustion interne à allumage commandé, comportant, pour une consigne de couple (Ccons) correspondant à une valeur d'enfoncement d'une pédale d'accélérateur par un conducteur du véhicule équipé du moteur, et un régime du moteur (N) :

- une étape de réglage de la charge (Qair) du moteur et d'une valeur d'avance à l'allumage nominale (AAnom) ;
- une étape de variation brutale à la baisse d'une nouvelle valeur de consigne de couple (Ccons,n) ;
- une étape de réglage de l'avance (AA) à une nouvelle valeur qui est déterminée en fonction de la nouvelle valeur de consigne de couple (Ccons,n),

**caractérisé en ce qu'**il comporte des étapes dans lesquelles :

- la nouvelle consigne de couple (Ccons,n) est comparée à un seuil de couple (Clin) ;
- si la nouvelle consigne de couple (Ccons,n) est supérieure audit seuil (Clin), l'avance (AA) est déterminée par une équation du type :

$$(\text{Equ.3}) \qquad AA = AAopti + a * (1-Ccons,n / Copti)^{1/2} \qquad ,$$

équation dans laquelle le paramètre a est une constante positive, AAopti désigne l'avance à l'allumage optimale produisant le couple optimal du moteur
- Si la nouvelle consigne de couple (Ccons,n) est inférieure audit seuil (Clin), l'avance (AA) est déterminée par une équation du type :

$$(\text{Equ.4}) \qquad AA = AAopti - b * (C/Copti) + c \qquad ,$$

équation dans laquelle les paramètres b et c sont des constantes positives et AAopti désigne l'avance optimale du moteur.

**Patentansprüche**

1. Verfahren zur Bestimmung der Zündvorverstellung (AA) in Abhängigkeit vom Drehmoment (C) eines Verbrennungsmotors mit gesteuerter Zündung durch Modellierung, welches für eine Menge von Parametern umfasst:

   - einen Schritt (300), in welchem der Wert der Vorzündung (AA) zwischen einem optimalen Vorzündungswert (AAopti), für welchen das Drehmoment (C) gleich dem optimalen Drehmoment (Copti) ist, und einem maximalen Vorzündungswert (AAmax), für welchen das vom Motor erzeugte Drehmoment (C) minimal ist, schrittweise erhöht wird und der Vorzündungswert ermittelt wird;
   - einen Schritt (400), in welchem der Wert des vom Motor erzeugten Drehmoments (C) für jeden Vorzündungswert von Schritt (300) ermittelt wird;
   - einen Schritt (500), in welchem eine Ermittlung aller Wertepaare Vorzündung (AA) / Drehmoment (C) durchgeführt wird, die den verschiedenen Einstellschritten entsprechen;
   - einen Schritt (600), in welchem aus den vorhergehenden Wertepaaren eine parabolische Beziehung zwischen dem Drehmoment (C) und der Vorzündung (AA) bestimmt wird, gemäß einer Gleichung vom Typ:

$$(\text{Glg.1}) \quad C/Copti = 1 - k * (AA-AAopti)^2,$$

   wobei in dieser Gleichung k eine positive Konstante ist,

   **dadurch gekennzeichnet, dass** es außerdem wenigstens umfasst:

   - einen Schritt (700), in welchem ein Vorzündungsschwellenwert (AAlin) ermittelt wird, der einen Drehmomentschwellenwert (Clin) erzeugt, oberhalb von dem der ermittelte Wert des Drehmoments (C), der von der Vorzündung (AA) erzeugt wird, größer als der Wert ist, der durch die der parabolischen Beziehung entsprechende Gleichung berechnet wird, und aus einer Untermenge von Wertepaaren Vorzündung / Drehmoment, für welche die Vorzündung (AA) größer als der Vorzündungsschwellenwert (AAlin) ist, eine lineare Beziehung zwischen dem Drehmoment (C) und der Vorzündung (AA) bestimmt wird, gemäß einer Gleichung vom Typ:

$$(\text{Glg.2})$$
$$C/Copti = K * ((AA_0-AAopti) - (AA-AAopti)),$$

   wobei in dieser Gleichung K eine positive Konstante ist; und $AA_0$ die Vorzündung bei Drehmoment null ist,
   - einen Schritt (800), in welchem:

      - die vorhergehenden Gleichungen invertiert werden, indem die Vorzündung (AA) in Abhängigkeit vom Drehmoment (C) durch Gleichungen vom Typ

$$(\text{Glg.3}) \quad AA = AAopti + a * (1-C/Copti)^{1/2}$$

      für die Drehmomentwerte, die zwischen dem Drehmomentschwellenwert (Clin) und dem optimalen Dreh- moment (Copti) liegen,

$$(\text{Glg.4}) \quad AA = AAopti - b * (C/Copti) + c$$

      für die Drehmomentwerte, die zwischen null und dem Drehmomentschwellenwert (Clin) liegen, bestimmt wird, wobei die Parameter a, b und c positive Konstanten sind; und

   - die Parameter in einem Speicher eines Rechners des Motors gespeichert werden und in einem Rechenblock des Rechners des Motors, der in der Lage ist, die Zündvorverstellung (AA) in Abhängigkeit vom Drehmoment (C) zu verstellen, eine Folge von Anweisungen für diese Verstellung programmiert wird, die wenigstens einen Schritt des Vergleichs des Drehmoments mit dem Drehmomentschwellenwert (Clin) und einen Schritt der Berechnung der Vorzündung gemäß Gleichung 3 oder gemäß Gleichung 4 in Abhängigkeit vom Ergebnis dieses Vergleichs umfasst.

2. Verfahren nach Anspruch 1, wobei die Parameter für mehrere Mengen von für den Betriebspunkt des Motors repräsentativen Parametern, die wenigstens die Ladung (Qair) und die Drehzahl (N) des Motors umfassen, in einem Speicher des Rechners gespeichert werden.

3. Verfahren nach Anspruch 2, wobei die Menge von für den Betriebspunkt des Motors repräsentativen Parametern außerdem eine Position ($\alpha$VVT) von Mitteln zur Nockenwellenverstellung des Motors und/oder einen Wert der Anreicherung (r) des Luft-Kraftstoff-Gemischs des Motors umfasst.

4. Verfahren nach einem der vorhergehenden Ansprüche, wobei der Schritt (300) der Änderung der Vorzündung (AA) auf dem Motorprüfstand unter Verwendung eines Kraftstoffs mit einer Oktanzahl durchgeführt wird, die höher als diejenige des für den Motor bestimmten handelsüblichen Kraftstoffs ist, so dass die optimale Vorzündung (AAopti) auf dem Prüfstand ohne Klingeln erreicht wird.

5. Verfahren nach einem der Ansprüche 2 bis 4, wobei die Ladung (Qair) auf dem Prüfstand für die Durchführung des Schrittes (300) der Änderung der Vorzündung (AA) bestimmt wird, indem wenigstens der Öffnungsgrad $\alpha$pap eines Drosselklappengehäuses (7) des Motors verstellt wird.

6. Verfahren nach Anspruch 5, wobei die Ladung (Qair) außerdem bestimmt wird, indem der Öffnungsgrad (RCOwg) eines Wastegateventils einer Turbine eines Turboladers des Motors verstellt wird.

7. Verfahren nach einem der vorhergehenden Ansprüche, wobei die Gleichungen zur Bestimmung des Drehmoments (C), die der parabolischen und der linearen Beziehung entsprechen, mittels der Methode der kleinsten Quadrate erhalten werden.

8. Verfahren zur Steuerung eines Verbrennungsmotors mit gesteuerter Zündung, welches für einen Drehmomentsollwert (Ccons), der einem Wert des Niedertretens eines Gaspedals durch einen Fahrer des mit dem Motor ausgestatteten Fahrzeugs entspricht, und eine Drehzahl (N) des Motors umfasst:

   - einen Schritt der Einstellung der Ladung (Qair) des Motors und eines Nennwertes der Zündvorverstellung (AAnom);
   - einen Schritt der plötzlichen Änderung nach unten auf einen neuen Drehmomentsollwert (Ccons,n);
   - einen Schritt der Einstellung der Vorzündung (AA) auf einen neuen Wert, welcher in Abhängigkeit von dem neuen Drehmomentsollwert (Ccons,n) bestimmt wird,

   **dadurch gekennzeichnet, dass** es Schritte umfasst, in denen:

   - der neue Drehmomentsollwert (Ccons,n) mit einem Drehmomentschwellenwert (Clin) verglichen wird;
   - falls der neue Drehmomentsollwert (Ccons,n) größer als der Schwellenwert (Clin) ist, die Vorzündung (AA) durch eine Gleichung vom Typ

$$\text{(Glg.3)} \quad AA = AAopti + a * (1 - Ccons,n/Copti)^{1/2}$$

   bestimmt wird, wobei in dieser Gleichung der Parameter a eine positive Konstante ist und AAopti die optimale Zündvoreinstellung bezeichnet, die das optimale Drehmoment des Motors erzeugt,
   - falls der neue Drehmomentsollwert (Ccons,n) kleiner als der Schwellenwert (Clin) ist, die Vorzündung (AA) durch eine Gleichung vom Typ

$$\text{Glg.4)} \quad AA = AAopti - b * (C/Copti) + c$$

bestimmt wird, wobei in dieser Gleichung die Parameter b und c positive Konstanten sind und AAopti die optimale Vorzündung des Motors bezeichnet.

**Claims**

1. Method for determining the ignition advance (AA) as a function of the torque (C) of a controlled-ignition internal-combustion engine by modelling, including, for a set of parameters:

    - A step (300) in which the value of the advance (AA) is increased incrementally between an optimum advance value (AAopti) for which the torque (C) is equal to the optimum torque (Copti) and a maximum advance value (AAmax) for which the torque (C) produced by the engine is minimal, and the advance value is plotted,
    - A step (400) in which the value of the torque (C) produced by the engine is recorded for each advance value from the preceding step (300);
    - A step (500) in which all of the pairs of advance (AA) and torque (C) values corresponding to the various adjustment increments are recorded,
    - A step (600) in which the aforementioned pairs of values are used to determine a parabolic relationship between the torque (C) and the advance (AA) using an equation of the type:

$$\text{(Equation 1)} \quad C/Copti = 1-k* \ (AA-AAopti)^2$$

    in which equation k is a positive constant,
    **characterized in that** it also includes at least:
    - A step (700) of recording an advance threshold value (AAlin) for the advance which produces a torque threshold value (Clin), above which the recorded value of the torque (C) produced by the advance (AA) is greater than the value calculated by the equation corresponding to said parabolic relationship, and a subset of pairs of advance/torque values for which the advance (AA) is greater than said advance threshold (AAlin) is used to determine a linear relationship between the torque (C) and the advance (AA), using an equation of the type:

$$\text{(Equation 2)} \quad C/Copti = K * ((AA_0 - AAopti) - (AA-AAopti))$$

    in which equation K is a positive constant and $AA_0$ is the advance for zero torque,
    - A step (800) in which:

        - the preceding equations are inverted, determining the advance (AA) as a function of the torque (C) using equations of the type:

$$\text{(Equation 3)} \quad AA = AAopti + a * (1-C/Copti)^{1/2},$$

        for torque values between said torque threshold (Clin) and the optimum torque (Copti)

$$\text{(Equation 4)} \quad AA = AAopti - b * (C/Copti) + c,$$

        for torque values between zero and said torque threshold (Clin),
        in which the parameters a, b and c are positive constants; and

        - said parameters are saved in a memory of a processor of the engine, and a calculation block of the processor of the engine that is able to adjust the ignition advance (AA) as a function of the torque (C) is used to program a sequence of instructions for said adjustment, including at least a step for comparing the torque with the torque threshold (Clin) and a step for calculating the advance according to equation 3 or according to equation 4 according to the result of said comparison.

2. Method according to Claim 1, in which said parameters are saved in a memory of the processor for a plurality of sets of parameters representing the operating point of the engine, including at least the load (Qair) and the speed (N) of the engine.

3. Method according to Claim 2, in which the set of parameters representing the operating point of the engine also includes a position ($\alpha$VVT) of variable valve timing means of the engine and/or a richness value (r) for the richness of the air-fuel mixture of the engine.

4. Method according to one of the preceding claims, in which the step (300) for varying the advance (AA) is performed on the engine test-bench using a fuel with a higher octane number than the commercial fuel intended for the engine, in order to achieve the optimum advance (AAopti) on the test-bench without knocking.

5. Method according to any one of Claims 2 to 4, in which the load (Qair) is determined on the test-bench, for implementation of the step (300) of varying the advance (AA), by adjusting at least the degree of opening $\alpha$pap of a throttle body (7) of the engine.

6. Method according to Claim 5, in which the load (Qair) is also determined by adjusting the degree of opening (RCOwg) of a wastegate of a turbine of a turbocharger of the engine.

7. Method according to any one of the preceding claims, in which the equations for determining the torque (C) corresponding to the parabolic and linear relationships are obtained using the method of least squares.

8. Method for controlling a spark-ignition internal-combustion engine comprising, for a torque setpoint (Ccons) corresponding to a value representing the depression of an accelerator pedal by a driver of the vehicle fitted with the engine, and an engine speed (N):

   - a step of setting the load (Qair) on the engine and a nominal ignition advance value (AAnom),
   - a step of abruptly lowering to a new torque setpoint value (Ccons,n),
   - a step of setting the advance (AA) to a new value that is determined as a function of the new torque setpoint value (Ccons,n),

   **characterized in that** it includes steps in which:

   - the new torque setpoint (Ccons,n) is compared to a torque threshold (Clin),
   - if the new torque setpoint (Ccons,n) is above said threshold (Clin), the advance (AA) is determined by an equation of the type:

   $$\text{(Equation 3)} \quad AA = AAopti + a * (1-Ccons,n / Copti)^{1/2},$$

   in which equation the parameter a is a positive constant, and AAopti denotes the optimum ignition advance producing the optimum torque from the engine,
   - if the new torque setpoint (Ccons,n) is below said threshold (Clin), the advance (AA) is determined by an equation of the type:

   $$\text{(Equation 4)} \quad AA = AAopti - b * (C/Copti) + c,$$

   in which equation the parameters b and c are positive constants and AAopti is the optimum advance of the engine.

**Fig. 1**

**Fig. 2**

100 — C,N

200 —
- $Q_{air} \rightarrow \alpha_{pap}, (RCO_{WG})$
- $AA_{nom}$
- $(\alpha_{VVT})$
- $(r)$

300 — $AA_{opti} \nearrow AA_{max}$

400 — $C_{opti} \searrow C_{min}$

500 —

600 —

700 —

800 —

**Fig. 3**

**Fig. 4**

## RÉFÉRENCES CITÉES DANS LA DESCRIPTION

**Documents brevets cités dans la description**

- US 6481416 B
- US 5765527 A

- WO 02095191 A2